Europäisches Patentamt

European Patent Office

Office européen des brevets

(19)

(11) Veröffentlichungsnummer: **0 285 742**
**B1**

(12) # EUROPÄISCHE PATENTSCHRIFT

(45) Veröffentlichungstag der Patentschrift:
28.11.90

(51) Int. Cl.⁵: **A47K 5/12**

(21) Anmeldenummer: **88100251.3**

(22) Anmeldetag: **11.01.88**

(54) Vorrichtung zur Abgabe von Seife, Creme od. dgl. mehr oder weniger viskosen Stoffen.

(30) Priorität: **12.01.87  DK 137/87**

(43) Veröffentlichungstag der Anmeldung:
**12.10.88 Patentblatt 88/41**

(45) Bekanntmachung des Hinweises auf die Patenterteilung:
**28.11.90 Patentblatt 90/48**

(84) Benannte Vertragsstaaten:
**BE DE FR GB NL SE**

(56) Entgegenhaltungen:
**EP-A- 0 219 931**
**WO-A-87/00743**
**US-A- 4 621 749**

(73) Patentinhaber: **Plum Kemi Produktion A/S,
Ostergade 38, DK-5610 Assens(DK)**

(72) Erfinder: **Katva, Ilmari, Sdr. Boulevard 56,
DK-5000 Odense C.(DK)**

(74) Vertreter: **Patentanwälte Leinweber & Zimmermann,
Rosental 7/II Aufg., D-8000 München 2(DE)**

## Beschreibung

Die Erfindung betrifft eine Vorrichtung zur Abgabe von Seife, Creme od. dgl. mehr oder weniger viskosen Stoffen, umfassend ein Gehäuse zur Aufnahme eines den betreffenden Stoff enthaltenden Behälters, wobei der Behälter mit einer verformbaren Behältertülle mit einem Ansaugventilmechanismus und einem mit Abstand von diesem angeordneten Auslaßventilmechanismus versehen ist, und eine die Tülle mit deren Auslaßventilmechanismus nach unten weisend abstützende Abstützung sowie ein Betätigungsteil, das gegenüber der Tüllenabstützung bewegbar ist, um mittels eines mit dem Betätigungsteil betätigbaren Pumpnockens die Tülle zwischen dem Ansaug- und dem Auslaßventilmechanismus zusammenzudrücken, wobei der Pumpnocken an einem Bauteil angeordnet ist, das über Lagerungsorgane mit dem Betätigungsteil schwenkbar verbunden ist.

Bei einer in der US-A 4 621 749 beschriebenen Vorrichtung dieser Art ist das den Pumpnocken tragende Bauteil mit zwei Lagerzapfen an dem Betätigungsteil angelenkt, an dem es sich über eine Druckfeder abstützt. Durch diese federnde Abstützung des Pumpnockens am Betätigungsteil soll erreicht werden, daß sich der Pumpnocken auf der Tülle abwälzt, um den darin befindlichen viskosen Stoff nach unten zum Auslaßventilmechanismus zu pressen. Da der Hub des Pumpnockens bei dieser bekannten Vorrichtung im wesentlichen dem Hub des Betätigungsteils entspricht, muß auf dieses eine verhältnismäßig große Kraft aufgebracht werden.

In der gemäß Art. 54 (3) EPÜ zum Stand der Technik gehörigen EP-A 0 219 931 ist eine Vorrichtung zur Abgabe von Seife beschrieben, bei der ein auf eine verformbare Behältertülle einwirkender Pumpnocken an einem Schlitten befestigt ist, der rechtwinklig zur Tülle verschiebbar ist. Der Schlitten ist mit einem schwenkbar gelagerten Betätigungsteil gekuppelt, wobei der Hub des Schlittens im wesentlichen dem Schwenkweg des Betätigungsteils entspricht, so daß auch hier eine verhältnismäßig große Kraft aufgewendet werden muß.

In der gleichfalls gemäß Art. 54 (3) EPÜ zum Stand der Technik gehörigen WO-A 87 00 743 ist eine Vorrichtung zur Abgabe von viskosen Stoffen beschrieben, bei der ein auf eine verformbare Behältertulle einwirkender Pumpnocken an einem Schwenkhebel angeordnet ist. Zur Betätigung des Schwenkhebels dient eine von einem Elektromotor angetriebene Nockenscheibe.

Der Erfindung liegt die Aufgabe zugrunde, die gattungsgemäße Vorrichtung dahingehend weiterzubilden, daß das Betätigungsteil eine verhältnismäßig große Bewegung durchlaufen muß, um eine verhältnismäßig kleine Bewegung des Pumpnockens zu bewirken, wodurch die durch den Auslaßventilmechanismus abgegebene Menge des betreffenden viskosen Stoffes sehr genau und mit geringem Kraftaufwand dosiert werden kann.

Erfindungsgemäß wird diese Aufgabe dadurch gelöst, daß das Betätigungsteil relativ zur Tüllenabstützung geradlinig und im wesentlichen rechtwinklig zur Tülle geführt ist, und daß das Bauteil ein Übersetzungsteil ist, das zwischen dem Betätigungsteil und der Tüllenabstutzung kippbar angeordnet ist, wobei die Lagerungsorgane des Übersetzungsteils von zwei am oberen Ende des Übersetzungsteils angeordneten, jeweils in ein Lagerungsloch im Betätigungsteil eingreifenden Lagerzapfen sowie von zwei am unteren Ende des Übersetzungsteils angeordneten, jeweils mit Freigang in eine Lagerungsvertiefung in der Tüllenabstützung eingreifenden Zapfen gebildet werden, wobei die Lagerungsvertiefungen beim Kippen des Übersetzungsteils eine abwärts gerichtete Bewegung des Übersetzungsteils und des von diesem getragenen Pumpnockens gestatten.

Zweckmäßige Weiterbildungen der Erfindung sind in den Unteransprüchen angegeben.

Die Erfindung wird im folgenden anhand der Zeichnung näher erläutert, in der

Fig. 1 einen vertikalen Schnitt nach der Linie I-I der Fig. 2 durch den unteren Teil einer Ausführungsform der Vorrichtung nach der Erfindung zeigt,

Fig. 2 einen Schnitt nach der Linie II-II der Fig. 1 durch den in Fig. 1 dargestellten Teil der Vorrichtung zeigt,

Fig. 3 einen der Fig. 1 entsprechenden Schnitt durch eine zur Vorrichtung gehörende Tülleabstützung in separater Darstellung zeigt,

Fig. 4 einen Schnitt nach der Linie IV-IV der Fig. 3 zeigt, und

Fig. 5 eine zur Vorrichtung gehörendes Übersetzungsteil in separater Darstellung zeigt.

In der Zeichnung bezeichnet 1 das Gehäuse der dargestellten Abgabevorrichtung, von dem nur der untere Teil dargestellt ist. Das Gehäuse besteht aus einer Rückwandplatte 2 und einer Frontwandplatte 3. Die Rückwandplatte 2 ist mit einer nach vorne ausragenden Absatzplatte 4 zum Abstützen eines Behälters 5 versehen, der den abzugebenden Stoff, z.B. Seife, Creme oder ein anderes Hautpflegemittel, oder einen ähnlichen Stoff enthält.

Der Behälter 5 ist unten mit einem Pumpmechanismus in der Form einer aus elastischem Material bestehenden rohrförmigen Tülle 6 versehen, an deren oberem Ende ein nicht näher dargestellter Saugventilmechanismus 7 vorgesehen ist, und an deren unterem Ende ein ebenfalls nicht näher dargestellter Auslassventilmechanismus 8 vorgesehen ist.

Die Verwendung derartiger Behälter erfolgt in der Weise, dass die Tülle 6 zwischen den Ventilmechanismen zusammengedrückt und dadurch abzugebender Stoff durch den Auslassventilmechanismus 8 herausgepresst wird. Wenn das Zusammendrücken der Tülle nachlässt, nimmt die Tülle 6 wieder ihre ursprüngliche Form an, wodurch neuer Stoff aus dem Behälter 5 über den Saugventilmechanismus in die Tülle eingesaugt wird.

Zur Erzeugung dieser Pumpwirkung weist die Vorrichtung eine fest angeordnete Abstützung 10 für die Tülle 6 und einen Betätigungsmechanismus auf. Der Betätigungsmechanismus besteht aus einem gegenüber der Abstützung 10 verschiebbar gelagerten Betätigungsteil 12 sowie aus einem zwischen der Abstützung 10 und dem Betätigungsteil 12 angeordneten Übersetzungsteil 14.

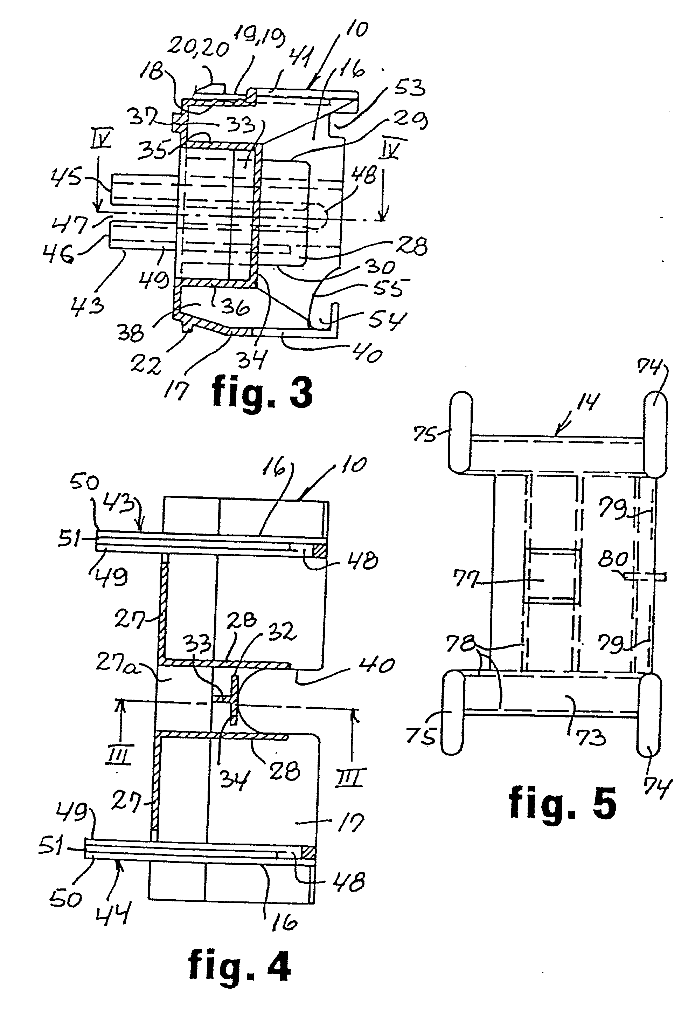

Die Tülleabstützung 10 weist zwei Seitenwände 16, 16, Fig. 3 und 4, und eine Bodenwand 17 auf, die sich mit Endbereichen über die unteren Ränder der Seitenwände 16 hinaus erstreckt. Die oberen Ränder der Seitenwände 16 sind durch einen oberen Wandteil 18 miteinander verbunden. Im oberen Wandteil 18 sind zwei Federzungen 19, 19 ausgebildet, von denen nur die vordere in Fig. 3 ersichtlich ist, und jede dieser Federzungen trägt einen Schnappnocken 20, 20. Die Bodenwand 17 trägt in ihrer Unterseite eine Verriegelungsleiste 22, die zusammen mit den Nocken 20, 20 zur lösbaren Montage der Abstützung 10 im Gehäuse der Vorrichung zwischen der Absatzplatte 4 und einer unteren von der Rückwand 2 der Vorrichtung herausragenden Absatzplatte 24 dient. Hierfür hat die Absatzplatte 24 eine längsgehende Rille 25 zur Aufnahme der Verriegelungsleiste 22, und sind in der Absatzplatte 4 Öffnungen 26, 26 zur Aufnahme der Nocken 20, 20 ausgebildet.

Die Bodenwand 17 und der obere Wandteil 18 sind durch einen Zwischenraum 27a bildende Rückwandteile 27, 27 miteinander verbunden. Der Zwischenraum 27a wird an den Seiten durch zwei elastischen Zungen 28, 28 begrenzt, deren oberen und unteren Kanten 29, 30 einen Abstand vom oberen Wandteil 18 bzw. der Bodenwand 17 haben.

Zwischen den Zungen 28, 28 ist ein im Querschnitt T-förmiger Pfosten 32 vorgesehen, dessen Steg mit 33 und dessen Flansch mit 34 bezeichnet ist, und der während der Verwendung der Vorrichtung als Widerlager für die Tülle 6 dient. Das obere und das untere Ende des Pfostens sind mit je einem Absatz 35 bzw. 36 verbunden, von denen der obere Absatz 35 über ein Paar Konsolen 37 mit dem oberen Wandteil 18 und der untere Absatz über ein Paar Konsolen 38 mit der Bodenwand 17 verbunden ist.

Die Bodenwand 17 ist mit einer U-förmigen Ausnehmung 40, Fig. 4, und der obere Wandteil 18 mit einer entsprechenden Ausnehmung 41 ausgebildet. Die Böden dieser Ausnehmungen fluchten mit dem Flansch 34 des Pfostens 32 und dienen zur Aufnahme der Tülle 6, so dass diese im Bereiche zwischen ihren Enden zur Anlage am Flansch 34 zwischen den Zungen 28, 28 gelangen kann.

Die Seitenwände 16, 16 sind jeweils mit einer Führung 43, 44 ausgebildet. Jede von diesen Führungen weist zwei Zungen 45, 46 auf, die von der betreffenden Seitenwand 16, 16 nach hinten herausragen. Die Zungen 45, 46 jedes Zungenpaares bilden zwischen sich einen Schlitz 47, und dieser setzt sich in der zugeordneten Seitenwand fort und mündet in eine gegenüber dem Schlitz erweiterte Öffnung 48 aus.

Längs jeder Seite jeden Schlitzes sind eine innere, den Schlitz überragende Führungsleiste 49, 49 und eine äussere mit einem kleinen Abstand vom Schlitz angeordnete Führungsleiste 50, 50 vorgesehen. Zwischen jeder inneren und äusseren Führungsleiste ist somit ein Absatz 51 gebildet. Diese Führungsanordnungen dienen, wie später näher erläutert wird, zur Führung des Betätigungsteils 12.

In der Stirnkante jeder Seitenwand 16 ist oben eine Vertiefung 53 und unten eine Lagerungsvertiefung 54 mit bogenförmiger Begrenzungswand 55 ausgebildet. Diese Lagerungsvertiefungen 54 dienen, wie später näher erläutert wird, zur verschiebbaren Lagerung des Übersetzungsteils 14.

Die Tülleabstützung 10 ist ein einstückiger Kunststoffgussteil.

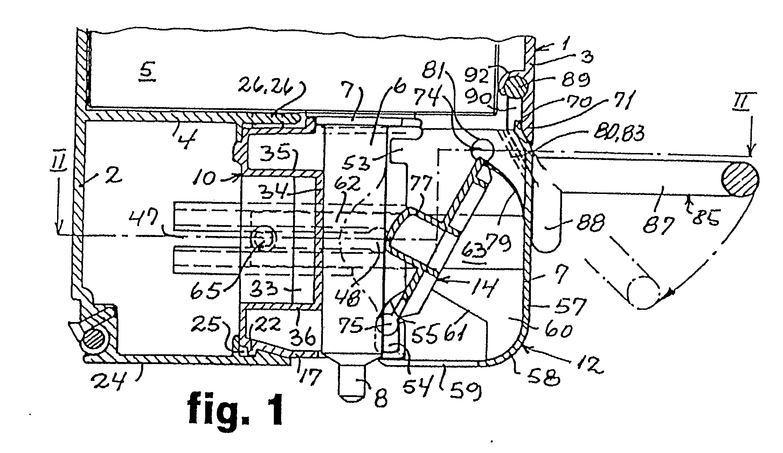

Das Betätigungsteil 12 hat, wie aus Fig. 1 ersichtlich, eine Vorderwand 57, die unten bogenförmig in ein Bodenteil 58 übergeht. In diesem ist eine der Ausnehmung 40 entsprechende U-förmige Ausnehmung 59 vorgesehen. Das Betätigungsteil 12 weist ferner zwei Seitenwände 60, 60 auf. In jeder dieser Seitenwände 60 ist unten eine Ausnehmung 61 vorgesehen, um bei Verschiebung (nach links in Fig. 1) des Betätigungsteils 12 Platz für die Bodenwand 17 der Unterstützung 10 zu schaffen.

Jede Seitenwand 60 ist mit einem nach hinten weisenden Führungsarm 62, 62 mit parallelen Kanten versehen, und fluchtend mit jeder von diesen ist an der Innenseite jeder Seitenwand 60 eine Führungswange 63, 63 vorgesehen. Am Ende jedes Führungsarms 62 ist ein nach innen weisender Führungsnocken 65 angeordnet, der mit einem im Querschnitt kreisförmigen Kopf 66 ausgebildet ist, dessen Durchmesser etwas kleiner als der der Öffnungen 48 aber grösser als der Abstand zwischen den inneren Führungsleisten 49 längs der Schlitze 47 der Abstützung ist. Jeder Nocken 65 ist ferner mit einem im Querschnitt kreisrunden Hals 67 ausgebildet, dessen Durchmesser dem Abstand zwischen den Führungsleisten 49 längs der Schlitze 47 der Abstützung entspricht, und ganz innen ist jeder Nocken 65 mit einem zylindrischen Kragen 68 versehen, dessen Durchmesser dem Abstand zwischen den Absätzen 51 längs der Schlitze der Abstützung entspricht. Die Breite der Führungsarme 62 und der Führungswangen 63 entspricht dem Abstand zwischen den äusseren Führungsleisten 50 an der Abstützung 10.

Aus dem vorstehenden wird hervorgehen, dass das Betätigungsteil 12 dadurch an der Abstützung 10 montiert wird, dass die Nocken 65, 65 von aussen in die Öffnungen 48 eingeführt werden, was dadurch ermöglicht wird, dass die freien Enden der Führungsarme 62 gegenüber einander federn können. Darauf kann das Betätigungsteil 12 in horizontale Stellung gekippt und nach links in der Zeichnung verschoben werden, wobei die Nockenhälse 67 zwischen den inneren Leisten 47 gleiten, und sich die Kragen 68 gegenüber den Absätzen 51 bewegen. Gleichzeitig werden die Führungsarme 62 und die Führungswangen 63 zwischen die äusseren Führungsleisten 50 aufgenommen.

Beim Abschluss der beschriebenen Montage wird die Oberkante 70 der Vorderwand 57 des Betätigungsteils 12 unter einen durch die Unterkante der Frontwand 3 der Vorrichtung gebildeten Überfall 71 eingeführt. Diese Einführung wird durch die Elastizität der Teile ermöglicht.

Das in Fig. 5 separat dargestellte Übersetzungsteil 14 wird durch einen im wesentlichen rechteckigen Plattenteil oder Balken 73 gebildet, an dessen oberer Kante zwei Lagerzapfen 74, 74 angeordnet sind, und an dessen unterer Kante zwei Lagerzapfen 75 angeordnet sind. Das Übersetzungteil 14 ist etwa an seiner Mitte mit einem zur Betätigung des Pumpmechanismus 6 dienenden Bewegeorgan in Form eines Pumpnockens 77 ausgebildet. Das Übersetzungteil ist an seiner dem Nocken 77 abgewandten Seite mit Versteifungsrippen 78 versehen. Das Übersetzungteil ist ferner längs seiner Oberkante mit zwei federnden Platten oder Zungen 79, 79 ausgebildet, die in Fig. 5 in die Zeichnungsebene zeigen, und zwischen denen ein Führungssteg 80 vorgesehen ist.

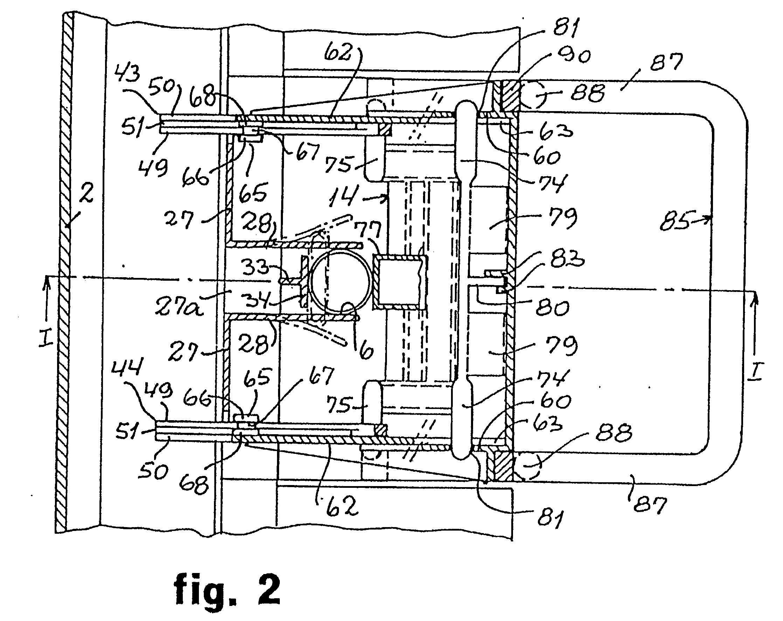

Zur schwenkbaren Lagerung der oberen Lagerzapfen 74, 74 weist jede der Seitenwände 61 des Betätigungsteils 12 ein Lagerungsloch 81 auf, und bei der in Fig. 1 dargestellten Lage sind die unteren Lagerzapfen 75, 75 jeweils mit Abstand vom Boden der Lagerungsvertiefungen 54 verschiebbar in diesen aufgenommen. In seiner montierten Lage wird das Übersetzungteil ferner mittels des Führungssteges 80 geführt, der zwischen ein Paar an der Innenseite der Vorderwand 57 ausgebildeter Lappen 83 eingreift, vgl. Fig. 2.

Bei der in der Zeichnung dargestellten Ausführungsform ist die Vorrichtung mit einem sogenannten Ellbogenbügel 85 versehen, der durch einen im wesentlichen U-förmigen Teil gebildet wird, dessen beide Schenkel 87 jeweils mit einem nach unten ragenden Zapfen 88 versehen sind, der an der Vorderwand 57 des Betätigungsteils 12 anliegt.

Der Ellbogenbügel ist mittels einer Lagerungsstange 89 im Gehäuse 1 gelagert, die sich zwischen zwei am Ende je eines Schenkels 87 vorgesehenen Armen 90 erstreckt. Die Lagerungsstange ist in Lagerungshaken 92 an der Innenseite der Vorderwand 3 gelagert.

Die Wirkungsweise der dargestellten Vorrichtung ist wie folgt:

Beim Kippen des Ellbogenbügels 85 in der in Fig. 1 gezeigten Pfeilrichtung drücken die Zapfen 88 des Ellbogenbügels das Betätigungsteil 12 nach links, wobei dieses in den früher beschriebenen Führungen geführt wird. Während dieser Verschiebebewegung wird das obere Ende des Übersetzungsteils 14 nach links bewegt, wobei die Zapfen 74 des Übersetzungsteils 14 von den Lagerungslöchern 81 mitgenommen werden. Gleichzeitig kippt das Übersetzungsteil 14 um seine unteren Lagerzapfen 75, die gleichzeitig in deren Lagerungsvertiefungen 54 nach unten verschoben werden. Während dieser Kippbewegung des Übersetzungsteils wird der Pumpnocken 77 die Tülle von deren dem Pumpnocken zugewandter Seite bis in die in Fig. 1 gestrichelt angedeutete Stellung verformen. Dadurch wird der Pumphub bewirkt und dieser ist beendet, wenn die oberen Zapfen 74 in die Vertiefungen 53 eingreifen. Die aus Fig. 1 ersichtlich, liegen die Federzungen 79 in der Ausgangslage in etwas gebogener Stellung und also mit einer kleinen Vorspannung an der Innenseite der Vorderwand 57 des Betätigungsteils 12 an. Während des beschriebenen Pumphubes wird das Übersetzungsteil 14, wie erwähnt, aus der dargestellten geneigten Ausgangslage gekippt, und damit wird seine Winkelstellung gegenüber der Vorderwand 57 geändert, wodurch die Federn 79 weiter gespannt werden. Während des Pumphubes wird der Nocken 77, wie erwähnt, die Tülle 6 in die in Fig. 1 gestrichelt dargestellte ovale Stellung verformen, wobei die Tülle gegen den Flansch 34 des T-förmigen Pfostens 32 geklemmt wird. Gleichzeitig erweitert sich die Tülle in Seitenrichtung, wie aus Fig. 2 ersichtlich, wobei die Tülle mit ihren Seiten gegen die Innenseiten der beiden federnden Zungen 28 drückt, so dass diese, wie in Fig. 2 gestrichelt gezeigt, aus deren Parallellage gezwungen und gespreizt werden. Nach Freigabe des Bügels 85 wird das Betätigungsteil 12 durch die Federn 79 des Übersetzungsteils 14 in Kombination mit der Rückführkraft, die von den Zungen 28 auf die Tülle 6 ausgeübt wird, wenn diese Zungen in ihre in Fig. 2 durch voll ausgezogene Linien dargestellte Ausgangslage rückkehren, in seine in Fig. 1 dargestellte Ausgangslage zurückgeführt werden. Dadurch wird in Ergänzung zur Elastizität der Tülle 6 eine positive Rückführung der Tülle in deren Ausgangsstellung erzielt, wobei sie Material aus dem Behälter 5 ansaugt.

Da der Pumpnocken 77 etwa an der Mitte des Übersetzungsteils 14 angeordnet ist, ergibt sich ein Übersetzungsverhältnis zwischen der auf das Betätigungsteil 12 ausgeübten Kraft und der vom Pumpnocken auf die Tülle ausgeübten Kraft. Die während des Pumphubes auf das Betätigungsteil 12 ausgeübte Kraft wird ein Moment um die unteren Zapfen 75 des Übersetzungsteils erzeugen, und dieses Moment wird der von der Tülle 6 auf den Nocken 77 ausgeübten Reaktionskraft entsprechen. Da der Abstand des Nockens von den Zapfen 75 etwa halb so gross ist wie der Abstand der oberen Zapfen 74 von den unteren Zapfen 75, wird die vom Pumpnocken 77 ausgeübte Pumpkraft also doppelt so gross sein wie die auf das Betätigungsteil 12 ausgeübte Kraft. Es leuchtet somit ein, das selbst ohne den Ellbogenbügel 85 ein Übersetzungsverhältnis zwischen Betätigungskraft und Pumpkraft erzielt wird, und die Vorrichtung wirkt daher auch ohne den Ellbogenbügel sehr gut. Dieser bewirkt jedoch wegen des Verhältnisses der Länge der Bügelschenkel 87 zur Länge der Zapfen 88 der Schenkel ein zusätzliche Kraftübersetzung.

Zum Austausch eines Behälters 5 braucht der Ellbogenbügel 85 lediglich entgegen dem Uhrzeigersinn in Fig. 1 gekippt zu werden, bis der Zapfen 88 von der Vorderwand 57 des Betätigungsteils 12 freigeht. Darauf kann die Oberkante 70 des Betätigungsteils 12 nach unten gezwungen werden, bis sie vom Überfall 71 freigegeben wird, worauf das Betätigungsteil 12 nach rechts, d.h. entgegengesetzt der im vorstehenden beschriebenen Montagebewegung, verschoben werden kann, bis sich die Führungsnocken 65 gegenüber den Öffnungen 48 befinden. Bei dieser Lage des Betätigungsteils 12 kann dieser im Uhrzeigersinn in Fig. 1 geschwenkt werden, worauf sich ein gefüllter Behälter 5 mit seiner Tülle 6 in der früher erläuterten Weise leicht einsetzen lässt. Darauf wird das Betätigungsteil 12 wieder in Horizontallage geschwenkt und dann nach links in Fig. 1 zum Eingriff der Oberkante 70 mit dem Überfall 71 verschoben, wonach der Ellbogenbügel in die in Fig. 1 dargestellte Stellung bewegt wird. Während der genannten Bewegung nach links in Fig. 1 werden die Lagerzapfen 75 durch die bogenförmigen Begrenzungswände 55 der Lagerungsvertiefungen 54 sicher in die Lagerungsvertiefungen eingeführt werden.

## Patentansprüche

1. Vorrichtung zur Abgabe von Seife, Creme od. dgl. mehr oder weniger viskosen Stoffen, umfassend ein Gehäuse (1) zur Aufnahme eines den betreffenden Stoff enthaltenden Behälters, wobei der Behälter mit einer verformbaren Behältertülle (6) mit einem Ansaugventilmechanismus (7) und einem mit Abstand von diesem angeordneten Auslaßventilmechanismus (8) versehen ist, und eine die Tülle (6) mit deren Auslaßventilmechanismus (8) nach unten weisend abstützende Abstützung (10) sowie ein Betätigungsteil (12), das gegenüber der Tüllenabstützung (10) bewegbar ist, um mittels eines mit dem Betätigungsteil (12) betätigbaren Pumpnockens (77) die Tülle (6) zwischen dem Ansaug und dem Auslaßventilmechanismus (7 und 8) zusammenzudrücken, wobei der Pumpnocken (77) an einem Bauteil angeordnet ist, das über Lagerungsorgane (74, 81) mit dem Betätigungsteil (12) schwenkbar verbunden ist, dadurch gekennzeichnet, daß das Betätigungsteil (12) relativ zur Tüllenabstützung (10) geradlinig und im wesentlichen rechtwinklig zur Tülle (6) geführt ist, und daß das Bauteil ein Übersetzungsteil (14) ist, das zwischen dem Betätigungsteil (12) und der Tüllenabstützung (10) kippbar angeordnet ist, wobei die Lagerungsorgane des Übersetzungsteils (14) von zwei am oberen Ende des Übersetzungsteils (14) angeordneten, jeweils in ein Lagerungsloch (81) im Betätigungsteil (12) eingreifenden Lagerzapfen (74) sowie von zwei am unteren Ende des Übersetzungsteils (14) angeordneten, jeweils mit Freigang in eine Lagerungsvertiefung (54) in der Tüllenabstützung (10) eingreifenden Zapfen (75) gebildet werden, wobei die Lagerungsvertiefungen (54) beim Kippen des Übersetzungsteils (14) eine abwärts gerichtete Bewegung des Übersetzungsteils (14) und des von diesem getragenen Pumpnockens (77) gestatten.

2. Vorrichtung nach Anspruch 1, dadurch gekennzeichnet, dass das Übersetzungsteil (14) mit mindestens einer biegbaren Plattenfeder (79) ausgebildet ist.

3. Vorrichtung nach Anspruch 1 oder 2 zur Verwendung mit einem aus einer verformbaren Behältertülle mit einem Ansaugventilmechanismus (7) und einem Auslassventilmechanismus (8) bestehenden Pumpmechanismus (6), dadurch gekennzeichnet, dass sie eine Tülleabstützung (10) mit einem Widerlager (34) für die Tülle sowie zwei federnden jeweils seitlich des Widerlagers (34) angeordneten Zungen (28) zum Wiederaufrichten der Tülle aufweist, wobei das Übersetzungsteil (14) durch eine als Hebel dienenden Platte und das Bewegeorgan durch einen an dieser Platte gegenüber dem Widerlager (34) angeordneten Pumpnocken (77) gebildet wird.

4. Vorrichtung nach Anspruch 3, dadurch gekennzeichnet, dass das Betätigungsteil (12) durch zwei an der Tülleabstützung (10) angeordnete Führungen (43,44) geradlinig in Bezug auf die Tülleabstützung geführt wird, welche Führungen jeweils zwei zwischen sich einen Schlitz (47) bildenden Zungen (45,46) haben und mit Führungsleisten zur Aufnahme den Führungsleisten entsprechender mit Gleitnocken (65,65) versehener Arme (62) des Betätigungsteils (12) ausgebildet sind.

## Revendications

1. Distributeur de savon, de crème et de produits plus ou moins visqueux, comprenant un boîtier (1) pour la réception d'un récipient contenant le produit concerné, le boîtier étant pourvu d'une douille de récipient (6) déformable avec un mécanisme de soupape d'aspiration (7) et un mécanisme de soupape de sortie (8) disposé à une certaine distance de ce dernier, et un support (10) formant appui pour la douille (6) avec son mécanisme de soupape de sortie (8) orienté vers le bas, ainsi qu'une pièce d'actionnement (12) déplaçable par rapport au support de douille (10) pour comprimer la douille (6) entre les mécanismes de soupape d'aspiration (7) et de sortie (8) à l'aide d'une came de pompage (77) actionnable par la pièce d'actionnement (12), la came de pompage (77) étant disposée sur une pièce de construction qui est reliée de façon pivotante à la pièce d'actionnement (12) par l'intermédiaire d'organes de palier (74, 81), caractérisé en ce que la pièce d'actionnement (12) est guidée de façon rectiligne par rapport au support de douille (10) et sensiblement rectangulairement par rapport à la douille (6), et que la pièce de construction est une pièce de transmission (14) qui est montée basculante entre l'organe d'actionnement (12) et le support de douille (10), les organes de palier de la pièce de transmission (14) étant formés par deux tourillons de palier (74) disposés à l'extrémité supérieure de la pièce de transmission (14) et s'engageant chacun dans un trou de palier (81) dans la pièce d'actionnement (12) ainsi que par deux tourillons (75) disposés à l'extrémité inférieure de la pièce de transmission (14) et s'engageant chacun, avec marche libre, dans un creux de palier (54) dans le support de douille (10), les creux de palier (54) permettant lors du basculement de la pièce de transmission (14) un mouvement orienté vers le bas da la pièce de transmission (14) et de la came de pompage (77) supportée par celle-ci .

2. Distributeur selon la revendication 1, caractérisé en ce que les creux de palier (54, 54) dans le support de douille (10) sont limités chacun à un côté par une arête de limitation (55) en forme d'un arc.

3. Distributeur selon la revendication 1, caractérisé en ce que le support de douille (10) comprend un contre-palier ou contrefort (34) pour le support de la douille (6) ainsi que deux languettes élastiques disposées chacune latéralement du contrefort (34) pour le relèvement de la douille (6) .

4. Distributeur selon la revendication 3, caractérisé en ce que la pièce d'actionnement (12) est guidée par rapport au support de douille par deux guidages (43, 44) disposés au support de douille (10) et qui comprennent chacun deux languettes (45, 46) formant entre elles une fente (47) et sont pourvus de baguettes de guidage pour la réception de bras (52) correspondant aux baguettes de guidage et pourvus de cames de coulissement (65, 65), de la pièce d'actionnement (12).

**Claims**

1. Apparatus for dispensing soap, cream or the like more or less viscose materials comprising a housing (1) for accommodating a container containing the material in question, said container comprising a deformable container outlet tube (6) wherein a suction valve device (7) and, at a distance from the suction valve device (7), an outlet valve device (8) are provided, said apparatus, moreover, comprising a support (10) for the outlet tube (6) with the outlet valve device (8) pointing downward and an operating part (12) moveable with respect to the support (10) for the tube in order to compress the tube (6) between the suction valve device and the outlet valve device (7 and 8, respectively) by means of a pump cam (77) activatable by means of the operating part (12), said pump cam (77) being arranged upon a structural member which by bearing means (74, 81) is pivotally connected with the operating part (12), characterized in that the operating part (12) is rectilinearly guided with respect to the tube support (10) substantially perpendicular to the tube (6) and that the structural member constitutes a lever element (14) which is pivotally arranged between the operating part (12) and the tube support (10); the bearing means for the lever element (14) being constituted by two bearing pins (74, 74) arranged at the top end of the lever element (14), each of which engages a corresponding bearing hole (81) provided in the operating part (12) and two bearing pins (75) arranged at the bottom end of the lever element (14), each of which engages a corresponding bearing recess (54) in the tube support (10) with a clearance such that the bearing recesses (54) by pivoting the lever element (14) allow a downward directed movement of the lever element (14) and of the pump cam (77) supported by the lever element (14).

2. Apparatus according to claim 1, characterized in that each of the bearing recesses (54, 54) in the tube support (10) at one side is defined by an arch-shaped limitation edge (55).

3. Apparatus according to claim 1, characterized in that the tube support (10) comprises an abutment (34) for supporting the tube (6) and two flexible tongues (28), one arranged at each side of the abutment (34) for re-shaping the tube (6).

4. Apparatus according to claim 3, characterized in that the operating part (12) is guided with respect to the tube support by means of two guidings (43, 44) arranged on the tube support (10), each of said guidings comprising two tongues (45, 46) forming a slot (47) therebetween, said guindings, moreover, comprising guiding ledges for accommodating corresponding arms (62) on the operating part (12), said arms (62) being provided with sliding cams (65, 65).

fig. 1

EP 0 285 742 B1

fig. 2

**fig. 3**

**fig. 4**

**fig. 5**